# FASCICULE DE BREVET EUROPEEN

(11) **EP 2 531 019 B1**
(45) Date de publication et mention de la délivrance du brevet: **11.10.2017**
(21) Numéro de dépôt: 10803105.5
(22) Date de dépôt: 30.11.2010
(51) Int. Cl.: A01G 9/14

(54) **SERRE TUNNEL ASYMETRIQUE**
ASYMMETRISCHES TUNNELGEWÄCHSHAUS
ASYMMETRIC TUNNEL GREENHOUSE

(30) Priorité: 02.02.2010 FR 1000399
(43) Date de publication de la demande: 12.12.2012
(73) Titulaire: Etablissement Barre S.A.S., 47320 Clairac (FR); Barre, Andrè, 47320 Clairac (FR)
(72) Inventeur: BARRE, André, 47320 Clairac (FR)
(74) Mandataire: Ipside
(86) Numéro de dépôt international: PCT/FR2010/000798
(87) Numéro de publication internationale: WO 2011/095700

(56) Documents cités:
- EP-A1- 0 694 252
- FR-A1- 2 481 061
- GB-A- 1 070 845
- US-A- 3 004 543
- US-A- 4 601 139

## Description

### Domaine de l'invention

La présente invention concerne un nouveau type de serre tunnel de culture et installation de culture la comportant.

### Etat de la technique antérieure.

Il est connu de l'art antérieur des serres tunnel de culture constituées d'une armature métallique destinée à être couverte par une bâche en matière plastique, de couverture, partiellement ou totalement enroulable, par des moyens connus, pour laisser passer l'air et protéger les cultures des intempéries, ladite bâche de culture pouvant être doublée par un rideau, dit d'ombrage, arrêtant totalement ou partiellement, pour en modérer les effets, le rayonnement solaire.

Ce type de serre tunnel peut être combiné avec une ou des serres tunnel parallèles dont une au moins est disposée latéralement sur un de ses côtés et fixée par des moyens connus aux montants du dit côté.

Ce type de serre tunnel est généralement constitué par une pluralité d'armatures régulièrement espacées avec des montants de piètement supportant et élevant au-dessus du sol des éléments de dôme.

Les montants de piètement de chacune des armatures sont généralement reliés par des éléments plus ou moins parallèles au sol qui peuvent servir à soutenir et/ou à suspendre des paniers de culture transversaux à l'axe du tunnel ou parallèles à l'axe de chacun des tunnels, les montants d'armature de chacun des tunnels étant reliés par des éléments parallèles à l'axe dudit tunnel.

Dans les serres tunnel connues telles que décrites, les éléments d'armature, piètement et dôme sont symétriques par rapport à leur axe longitudinal.

Les couvertures de ces éléments d'armature sont dotées d'ouverture, par exemple au niveau du dôme, soit par enroulement total ou partiel de la bâche de couverture qui sont de valeur et dimension égale d'un côté ou de l'autre par rapport à l'axe du tunnel.

Ces dispositions connues ne permettent pas d'adapter la ventilation au mieux, et donc la climatisation naturelle, en fonction des conditions climatiques et notamment d'ensoleillement et du sens des vents dominants, ni en fonction des reliefs plus ou moins accentués et qui n'est pas toujours plan du niveau du sol mais au contraire qui peut être plus ou moins pentu.

Il est apparu qu'il pouvait être utile de pouvoir orienter les serres tunnel, qu'il y en ait une ou plusieurs adjacentes parallèlement au mieux pour profiter de l'orientation de l'ensoleillement des vents dominants et de la configuration du terrain en fonction de ces données pour solutionner au mieux les conditions de conditionnement naturel interne dans les tunnels de culture en fonction desdites données pour que les plantations bénéficient des meilleures conditions naturelles de culture, ce qui évite le recours à l'utilisation de moyens de climatisation internes, ventilation et/ou ensoleillement et donc chauffage artificiel et donc coûteux.

Le recours à des moyens artificiels outre le surcoût qu'ils représentent sur le prix des produits étant par ailleurs actuellement critiques en ce sens que non seulement ils ne permettent pas d'optimiser les conditions de développement des végétaux, et donc de production, d'autant qu'il est apparu en terme de production que vouloir produire à contresaison était une hérésie au niveau écologique, au niveau biologique et au niveau économique. En quelques mots et pour être plus clair, vouloir produire des tomates, c'est un exemple, en hiver a d'autant moins de sens hors saison que les consommateurs ont pris conscience de la nécessité et de l'intérêt, pour des raisons à la fois gustatives, écologiques, et économiques d'un retour au respect de la saisonnalité de leur production.

De plus, la protection des cultures par les serres doit être efficace contre les intempéries, pluie et grêle, et contre un ensoleillement excessif, ce qui conduit dans ce dernier cas à l'utilisation d'un rideau dit «d'ombrage».

Dans le cas de cultures, de plus en plus répandues sous serre de produits biologiques, pour éviter l'usage de produits chimiques insecticides, il est obligatoire lorsque la serre est pourvue d'ouvertures d'aération d'utiliser celles-ci par un filet anti-insecte.

Le recours à ce filet crée plusieurs difficultés :
- ce filet obture partiellement les ouvertures d'aération ou s'il y en a plusieurs sous forme de portions en panneaux articulées et l'ouverture si celle-ci est constituée par la paroi de couverture de serre, qui est en totalité ou partie mais sur toute la longueur de la serre, relevée par enroulement ou tout autre moyen connu. Il en résulte une insuffisance d'aération et un échauffement de l'atmosphère de la serre qui peut être préjudiciable à certaines cultures qui sous un ensoleillement normal sont productives mais qui ne supportent pas un excédent de chaleur.
- un autre problème est lié au filet anti-insecte lui même que l'utilisateur peut avoir besoin d'enlever de l'ouverture sans le retirer de la couverture. L'enroulement de ce filet n'est pas toujours compatible avec la structure de la serre et notamment lorsque deux serres sont accolées et qu'un chêneau de réception et d'évacuation des eaux pluviales est disposé entre elles, celui-ci fait obstacle au repliement du rideau vers le bas.

On connaît un serre tunnel asymétrique du document GB-A-1070845.

### Exposé de l'invention.

La présente invention à pour objet de résoudre les problèmes sus évoqués.

Pour ces raisons, les serres tunnel de culture selon l'invention du type destinées à être couvertes par une bâche plastique de couverture transparente partiellement ou totalement enroulable pour laisser passer l'air, et protéger les cultures des intempéries, ladite bâche de culture pouvant être doublée par un rideau d'ombrage arrêtant totalement ou partiellement pour modérer le rayonnement solaire, ladite serre tunnel pouvant être combinée avec une ou des serres tunnel, dont au moins une est disposée latéralement sur un de ses côtés se caractérise essentiellement en ce que ladite serre tunnel est asymétrique, un de ses côtés ou paroi latérale longitudinale présente une hauteur supérieure à la hauteur de l'autre présente une partie supérieure verticale,
- chaque arceau est formé de deux poteaux verticaux d'égales hauteur supportant une structure de ferme composée de deux profilés cintrés, tubulaires, joints l'un à l'autre au niveau de la ligne de faîte par un manchon de raccordement
- le premier de ces profilés présente au droit du poteau correspondant une partie verticale ou sensiblement verticale et forme avec ce poteau le côté le plus haut.
- la partie verticale que présente le profilé est conformée en coude en zone inférieure, que la concavité du coude est tournée vers le haut et que cette partie verticale présente au-delà du coude une partie rectiligne orientée vers le haut et inclinée par rapport à la verticale prévue pour recevoir en engagement de forme l'extrémité inférieure du second profilé de ferme de l'arceau de l'ossature de ferme attenante.

Cette disposition permet au première heures de la journée un éclairement optimal de la serre, les rayons solaires étant sensiblement perpendiculaires aux ouvrants et étant de ce fait peu réfléchis par ces derniers.

En outre ces dispositions permettent d'assurer la verticalité des poteaux lorsque la serre est implantée sur des terrains en pente.

Selon une autre caractéristique de l'invention, le premier profilé de ferme est maintenu par le coude sur le poteau correspondant par deux flasques parallèles fixés au poteau et déterminant un intervalle de serrage dans lequel est engagé en serrage le coude que forme ledit premier profilé de ferme.

Selon une autre caractéristique de l'invention, la partie supérieure du côté de plus grande hauteur comporte une ouverture longitudinale d'aération recevant un ouvrant articulé selon un axe horizontal parallèle à la ligne de faîte et pouvant occuper une position de fermeture, une position d'ouverture et des positions intermédiaires entre ces deux positions.

Selon une autre caractéristique de l'invention, l'ossature de l'ouvrant est formée d'une série de montants rectilignes ou cintrés, réunis les uns aux autres au niveau d'une de leur extrémité par une lisse horizontale, parallèle à la ligne de faîte de la serre et articulés leurs autres extrémités aux arceaux de l'ossature de la serre selon un axe d'articulation parallèle à la ligne de faîte.

Selon une autre caractéristique de l'invention, l'ouvrant, en position de fermeture, vient contre un profilé d'étanchéité, élastiquement déformable s'étendant le long de l'un des bords horizontaux de l'ouverture d'aération.

Selon une autre caractéristique de l'invention, le profilé d'étanchéité est transparent à la lumière.

Selon une autre caractéristique de l'invention, le profilé d'étanchéité s'étend le long du bord supérieur de l'ouverture d'aération, et l'ouvrant s'ouvre vers l'intérieur de la serre et est articulé à l'ossature de la serre selon un axe d'articulation occupant une position inférieure par rapport audit ouvrant.

Selon une autre caractéristique de l'invention, le profilé d'étanchéité est formé de deux ailes perpendiculaires l'une à l'autre, la première de ces deux ailes étant plus large que l'autre, et ce profilé d'étanchéité, en position dans l'ouverture d'aération, est positionné en sorte que sa première aile soit horizontale ou sensiblement horizontale et tournée vers l'extérieur et sa seconde aile soit verticale ou sensiblement verticale et soit dans le plan de l'ouverture, ladite seconde aile en position de fermeture de l'ouvrant recevant en appui la lisse de l'ossature de ce dernier.

Selon une autre caractéristique de l'invention, la première aile du profilé d'étanchéité est engagée en fixation dans la rainure longitudinale d'un profilé tubulaire, supérieur d'accrochage, longeant la bordure supérieure horizontale de l'ouverture d'aération.

Selon une autre caractéristique de l'invention, la seconde aile du profilé d'étanchéité présente selon sa bordure longitudinale un repli longitudinal de section droite en U formant une gorge élastique de fixation.

Selon une autre caractéristique de l'invention, est prévu un filet anti-insecte fixé par une de ses bordures longitudinales dans la gorge du profilé d'étanchéité, par son autre bordure longitudinale dans une gorge de la lisse de l'ossature de l'ouvrant, ledit filet comportant deux soufflets latéraux fixés aux côtés latéraux de l'ouverture d'aération.

Selon une autre caractéristique de l'invention, l'ouvrant s'ouvre vers l'intérieur et est articulé à l'ossature de la serre selon un axe d'articulation occupant une position supérieure par rapport audit ouvrant.

Selon une autre caractéristique de l'invention, l'ouvrant s'ouvre vers l'extérieur et est articulé à l'ossature de la serre selon un axe d'articulation occupant une position supérieure par rapport audit ouvrant.

### Exposé sommaire des figures et des dessins.

D'autres avantages et caractéristiques de l'invention apparaîtront à la lecture de la description d'une forme préférée de réalisation donnée à titre d'exemple non limitatif en se référant aux dessins annexés en lesquels :

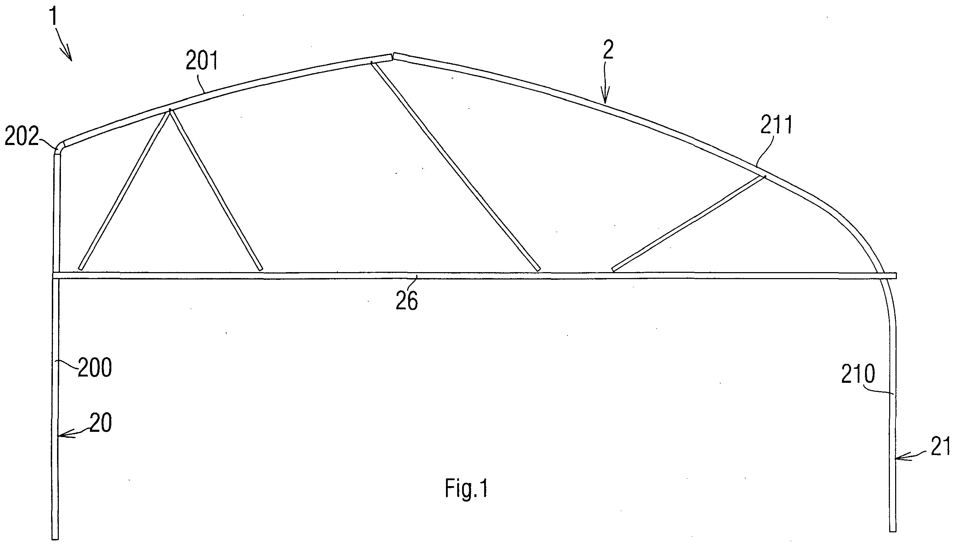

- la figure 1 est une vue de face d'une ossature de serre selon l'invention,

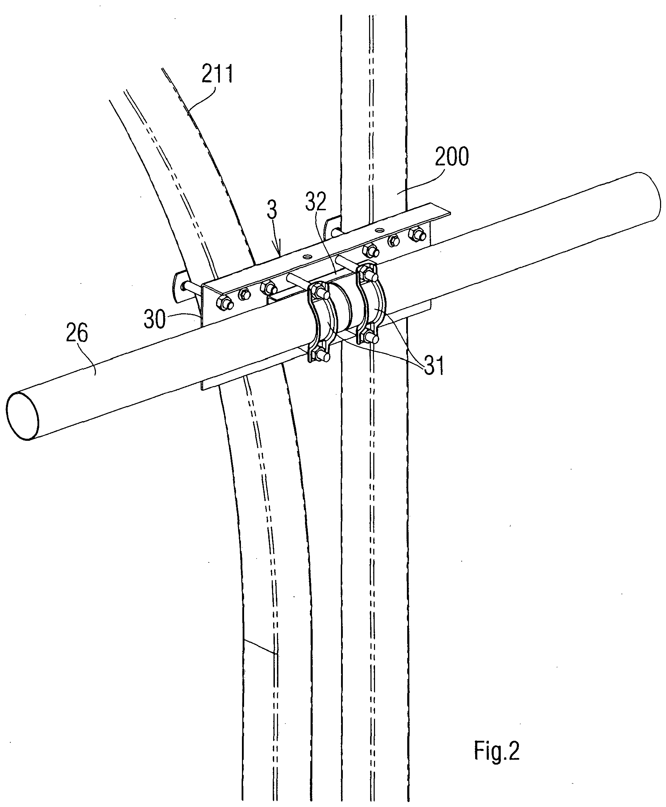

- la figure 2 est une vue en perspective montrant la liaison d'une barre transversale à l'un des jambages de chaque arceau de l'ossature,
- la figure 3 est une d'une serre comportant plusieurs tunnels accolés les uns aux autres,

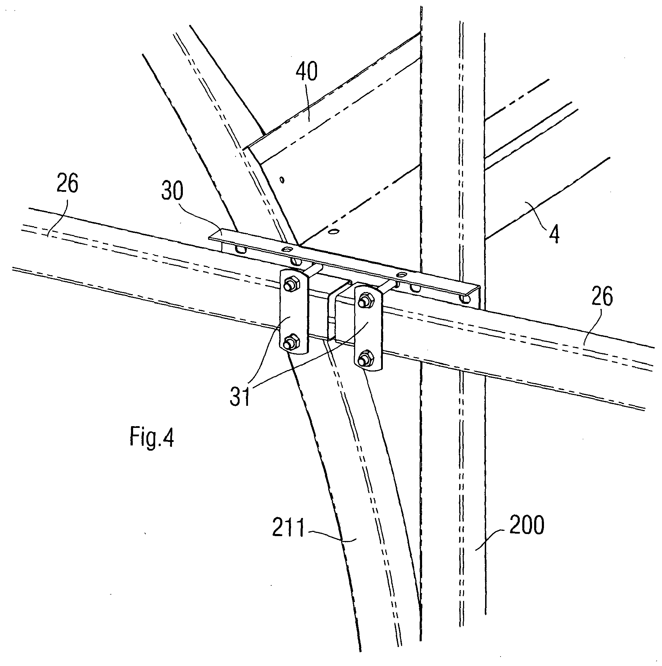

- la figure 4 est une vue en perspective de l'assemblage d'un chêneau entre deux tunnels de serre accolés,
- la figure 5 est une vue en perspective d'une serre conforme à l'invention, équipée de moyens d'enroulement des pans de bâche,
- les figures 6 à 8 montrent d'autres formes de réalisation d'une serre conforme à l'invention,
- les figures 9 et 10 montrent un arceau de serre selon une autre forme de réalisation, le chéneau et son support notamment n'étant pas représenté sur cette figure 10.

### Meilleure manière de réaliser l'invention.

Telle que représentée la serre tunnel 1 de culture, conforme à l'invention est constituée d'une armature métallique recouverte par au moins un élément souple du type bâche, transparent au rayonnement visible et au rayonnement infra rouge proche et imperméable au rayonnement infra rouge lointain de façon à favoriser la création de l'effet de serre.

Cette bâche habituellement en matière synthétique peut être associée à un filet d'ombrage ainsi qu'à un filet dit anti-insecte à mailles dont la petitesse est suffisante pour interdire le passage aux insectes nuisibles et suffisante pour favoriser l'aération de la serre, ce filet pouvant aussi être utilisé pour confiner dans la serre des insectes pollinisateurs.

Le tunnel 1 que forme la serre forme deux parois longitudinales, latérales verticales, dont une présente une hauteur supérieure à celle de l'autre, et un dôme présentant une ligne de faîtage parallèle aux parois latérales et décalée vers la paroi de plus grande hauteur. Ainsi le dôme présente deux pentes d'inégales longueurs.
En partie supérieure, cette paroi de plus grande hauteur est dotée d'une ouverture longitudinale associée à un ouvrant 10 formé d'un volet articulé, la manoeuvre de cet ouvrant en ouverture et fermeture étant commandée à distance.

L'ossature de chaque tunnel de serre est constituée d'une succession d'arceaux 2 régulièrement espacés réunis les uns aux autres par des lisses sommitale et latérales.

Chaque arceau 2, formé à partir d'un ou plusieurs profilés métalliques tubulaires par exemple, est réalisé par la jonction de deux jambages 20, 21 s'étendant vers le haut. Chaque jambage 20, 21 présente une partie rectiligne 200, 210 verticale formant montant prolongée vers le haut par une partie courbe 201, 211 formant segment de dôme ces segments de dôme étant réunis l'un à l'autre par leur extrémité libre selon la ligne sommitale, cette dernière étant latéralement décalée vers le premier jambage 20. La partie rectiligne 200 du premier jambage 20 présente une hauteur supérieure à celle de la partie rectiligne 210 du second jambage. On peut remarquer que pour ce qui concerne le premier jambage 20, le segment de dôme 201 correspondant est lié au montant 200 par un manchon de liaison 202 tandis que pour ce qui concerne l'autre jambage, le segment de dôme 211 fait corps avec le montant 210 et résulte d'une opération de cintrage. On pourra prévoir aussi le fait que ce segment de dôme soit raccordé par un manchon de liaison approprié à ce montant 210.

On peut remarquer que les deux jambages 20, 21 peuvent être liés l'un à l'autre par une barre transversale 26 formée d'un élément tubulaire. Cette barre transversale 26, outre le fait de conférer une rigidité transversale à l'arceau 2 peut servir avantageusement de barre de culture, c'est-à-dire de barre de suspension de divers accessoires de culture tels que bacs, tuyau d'arrosage etc.

Cette barre transversale 26 est solidarisée à l'arceau 2 par deux moyens de liaison 3, d'extrémité, comprenant chacun une platine de liaison 30, verticale fixée au jambage correspondant et au moins un étrier de fixation 31 solidaire de la platine et prévu pour fixer rigidement la barre transversale 26 à cette dernière. Avantageusement pour une barre de culture 26 de section droite circulaire sera prévu un berceau d'appui 32 orientable. Ce berceau 32, de section droite en U prendra appui par sa zone dorsale contre la platine de liaison 30, la barre 26 quant à elle prendra appui contre les bordures libres des deux ailes du berceau et contre la face intrados de l'aile basale de ce dernier. Cette disposition a pour effet de répartir les pressions et d'éviter le poinçonnage de la barre lors de sa fixation à la platine. Pour la fixation d'une barre de culture 26 de section droite polygonale, le berceau 32 pourra ne pas être présent.

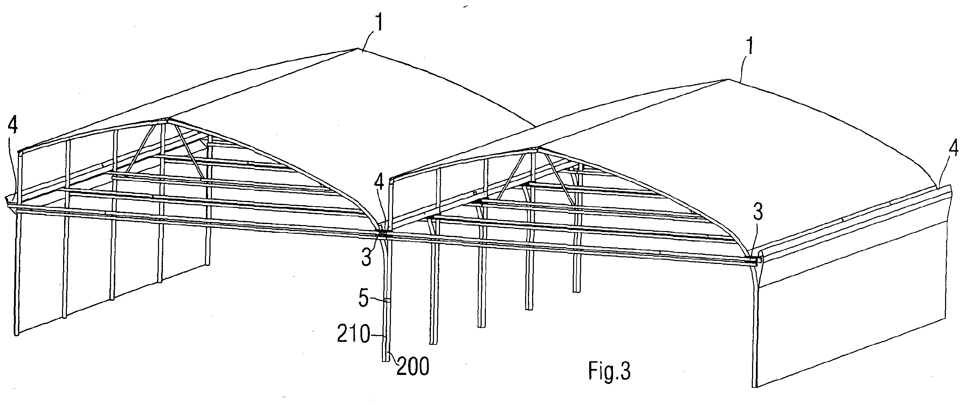

En figure 3 est représentée en perspective une serre formée de plusieurs tunnels 1 accolés les uns autres et définissant un seul et même volume interne non cloisonné. On peut voir dans cette disposition que l'ouvrant de chaque tunnel est en regard de la pente de plus grande longueur du tunnel attenant. Une telle disposition est propice, aux premières heures de la journée, à favoriser la pénétration des rayons lumineux dans la serre.

Selon cette forme de réalisation, le tunnel que forme la serre sera bordé latéralement par deux chéneaux 4 de récupération et d'évacuation des eaux de pluies, prenant appui avantageusement sur les platines 30 de liaison. Avantageusement, ces dernières présenteront chacune un rebord d'appui horizontal pour recevoir en appui le chéneau 4 correspondant.

Chaque chéneau 4, selon une forme pratique de réalisation, est formé de tronçons de chéneau 40 aboutés les uns aux autres et réunis deux à deux par un étrier de liaison non représenté prévu pour prendre appui sur l'aile horizontale de la platine de liaison 30 correspondante. Chaque tronçon de chéneau, formé par pliage d'une tôle, comprend un fond 41 horizontal, deux ailes latérales 42 s'étendant vers le haut depuis le fond 41 et présentant chacune en partie supérieure un rebord longitudinal 43 s'étendant vers l'extérieur. Les deux chéneaux latéraux 4 seront utilisés pour la fixation des pans de bâche couvrant la partie inférieure des parois latérales. Le chéneau associé à la paroi de plus faible hauteur sera utilisé aussi pour la fixation du pan de bâche supérieur, ce dernier recouvrant avantageusement toute la surface du dôme du tunnel.

Selon une première forme préférée de réalisation, chaque chéneau 4 par au moins l'une de ses deux extrémités est en relation de communication avec un entonnoir de récupération des eaux installé en extrémité de supérieure d'une conduite verticale d'évacuation des eaux elle-même en relation de communication avec un réseau d'évacuation. Une telle disposition est propice à éviter toute accumulation d'eau autour de la serre.

Avantageusement chaque platine de liaison 30 peut être utilisée pour lier l'un à l'autre deux arceaux de deux tunnels contigus. Dans ce cas de figure, il est avantageux que les deux barres de culture 26 correspondantes soient dans l'alignement l'une de l'autre et pour cette raison un seul et même berceau sera utilisé pour recevoir l'extrémité de ces dernières. En outre chaque chéneau 4 sera commun à deux tunnels consécutifs. Comme on peut le voir, chaque platine de liaison 30 coopère en fixation avec la partie rectiligne 200 du jambage 20 de l'un des arceaux et avec le segment de dôme 211 du jambage 21 de l'arceau contigu. De cette façon est assurée la fixation rigide des tunnels les uns aux autres. Cette fixation sera avantageusement complétée par des brides de liaison 5 fixées entre elles et respectivement aux parties rectiligne 200, 210 des jambages contigus. De telles dispositions permettent de lier deux tunnels consécutifs l'un à l'autre mêmes si ces derniers sont décalés en hauteur l'un par rapport à l'autre. Dans cette configuration au niveau de la liaison entre les arceaux des deux tunnels, le jambage de l'arceau du tunnel le plus haut pourra par son extrémité inférieure se trouver à distance du sol. Dans ce cas de figure, les charges seront transmises au jambage de l'arceau du tunnel le plus bas par les brides de liaison. Une telle disposition permet donc l'installation de cette serre sur des terrains en pente tout en conservant la verticalité des montants des arceaux. De cette façon, ces arceaux seront à même de résister au poids de la neige ou de la grêle. En outre en raison de la possibilité d'orientation des berceaux, les barres de culture pourront être disposées parallèlement à la pente du terrain.

La bordure supérieure de l'ouverture associée à l'ouvrant est bordée par un profilé dit de clipsage du type de ceux prévus pour recevoir une clé de blocage, sous forme de profilé, du pan de bâche de recouvrement du dôme.

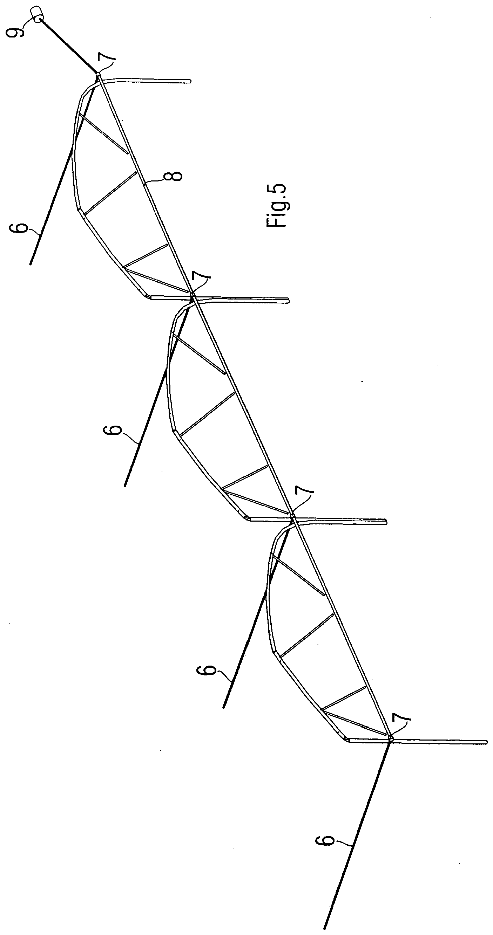

Enfin comme on peut le voir en figure 5, les pans de bâche notamment au niveau des ouvrants pourront être manoeuvrés par des barres d'enroulement 6, les pans étant alors enroulés sur ces dites barres.

Ces barres d'enroulement 6 seront chacune accouplées par un couple conique 7 à une barre d'entraînement 8 parallèle aux barres 26 et accouplées par joint cardan ou équivalent à un organe moteur 9.

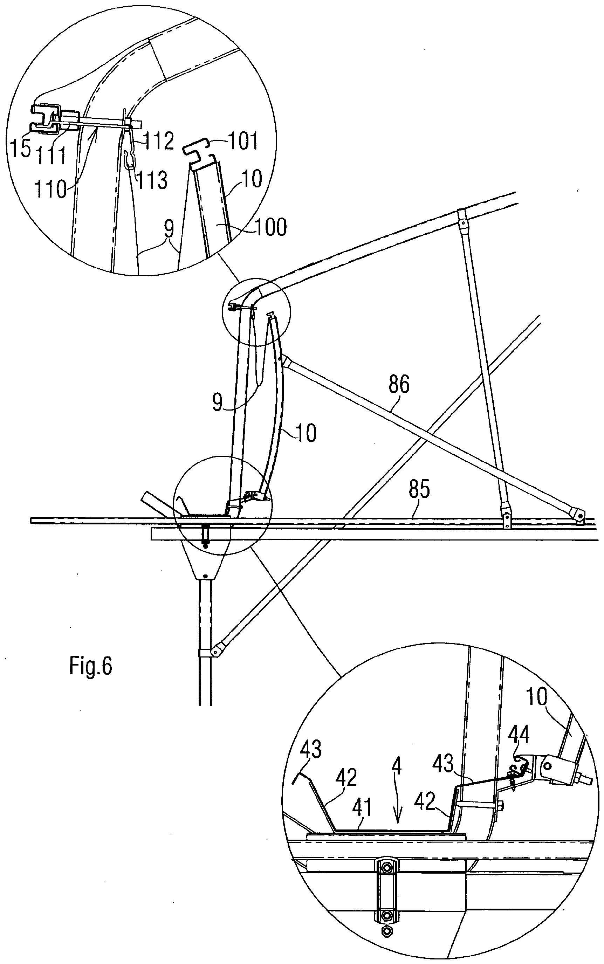

En figures 6 à 8 sont représentés plusieurs modes de réalisation de l'aération supérieure de la serre selon l'invention. On peut voir sur ces figures que l'ouvrant 10 est formé d'une ossature articulée recevant un élément de recouvrement sous forme de bâche transparente à la lumière.

Pour les formes de réalisation objet de ces figures, chaque chéneau présente un premier rebord 43 cintré formant une concavité orientée vers le bas et un second rebord 43 plan, plus large que le premier occupant une position proche de l'horizontale. Ce second rebord pénètre dans la serre tunnel attenante pour y recevoir en fixation, selon sa bordure longitudinale, un profilé d'accrochage 44.

Afin de pénétrer dans le volume de la serre le rebord 43 considéré est doté de perforations traversantes, sous forme d'encoches rectangulaires de passage des arceaux. Avantageusement, chaque perforation occupe toute la largeur du rebord. Ainsi ce rebord 43 est situé en partie à l'extérieur du volume interne de la serre et en partie à l'intérieur de ce volume. Au moins la largeur de chaque encoche correspond à la largeur de la section droite de l'arceau correspondant, cette section droite étant également rectangulaire. De cette façon très peu de jeu subsiste entre le montant et les bordures latérales des encoches.

Selon la forme préférée de réalisation, l'ossature de l'ouvrant est formée d'une série de montants 100 rectilignes ou cintrés, réunis les uns aux autres au niveau d'une de leur extrémité par une lisse horizontale 101, parallèle à la ligne de faîte de la serre et articulés leurs autres extrémités aux arceaux de l'ossature de la serre selon un axe d'articulation parallèle à la ligne de faîte et matérialisé par des tourillons portés chacun par fourreau supporté par une patte fixée à l'arceau correspondant. Ce tourillon extérieurement au fourreau reçoit en articulation une chape fixée en extrémité du montant correspondant.

En position de fermeture de l'ouvrant 10, la lisse 101 de ce dernier vient en appui contre un profilé d'étanchéité 110 élastiquement déformable s'étendant le long du bord supérieur horizontal de l'ouverture d'aération. De préférence ce profilé est réalisé dans une matière synthétique transparente à la lumière afin de ne pas former d'ombres dans la serre.

Ce profilé d'étanchéité 110 est essentiellement formé de deux ailes 111, 112 perpendiculaires l'une à l'autre, la première 111 de ces deux ailes étant préférentiellement plus large que l'autre. Ce profilé d'étanchéité, en position dans l'ouverture d'aération, est positionné en sorte que sa première aile 111 soit horizontale ou sensiblement horizontale et tournée vers l'extérieur et sa seconde aile 112 soit verticale ou sensiblement verticale et soit dans le plan de l'ouverture. Cette seconde aile 112 en position de fermeture de l'ouvrant reçoit en appui la lisse 101 de l'ossature de ce dernier, ce qui est garant d'une bonne étanchéité à ce niveau.

Par la bordure longitudinale de la première aile 111, le profilé d'étanchéité est engagé en fixation dans la rainure longitudinale d'un profilé tubulaire 15, supérieur d'accrochage, longeant la bordure supérieure horizontale de l'ouverture d'aération et destiné à recevoir la bordure du pan de bâche de recouvrement de l'ossature de la serre et plus particulièrement de la partie de cette dernière formant les pans de toiture. Ce profilé tubulaire 15 présente une section droite inscrite dans un carré. Il présente selon une de ses quatre faces, une fente longitudinale formée par deux replis parallèles tournés vers l'intérieur. Sur la face opposée, ce profilé présente une gorge longitudinale en U de section droite rectangulaire, cette gorge étant formée par déformation de la paroi correspondante, cette dernière présentant alors notamment deux flancs latéraux parallèles formant les flancs latéraux de la gorge. Ainsi ce profilé 15 forme deux gorges longitudinales imbriquées l'une dans l'autre, la première de ces gorges présentant une section droite substantiellement en H, la seconde, comme dit précédemment une section droite rectangulaire. Le profilé d'étanchéité se fixe par sa première dans la gorge en forme de H du profilé de clipsage. Il y a lieu de noter que les montants 100 de l'ouvrant et la lisse 101 de ce dernier sont constitués chacun par un profilé identique à celui qui vient d'être décrit.

La première aile 111 du profilé d'étanchéité 100 est configurée de façon à présenter un décrochement longitudinal afin de pouvoir être appliquée par la face de ce décrochement contre l'un des deux flancs latéraux de la gorge en U. Une telle disposition est notamment visible en figure 6.

La seconde aile 112 du profilé d'étanchéité présente selon sa bordure longitudinale un repli longitudinal de section droite en U formant un gorge élastique 113 de fixation de la bordure d'un filet anti-insecte 9 comme il sera décrit plus loin.

Dans la forme de réalisation objet de la figure 6, l'ouvrant 10 s'ouvre vers l'intérieur et est articulé à l'ossature de la serre selon un axe d'articulation situé en partie inférieure, la lisse 101 de l'ouvrant et le profilé d'étanchéité 110 occupant alors une position supérieure. En raison de cette disposition on évite que la pluie rentre dans la serre lorsque l'ouvrant est en position d'ouverture.

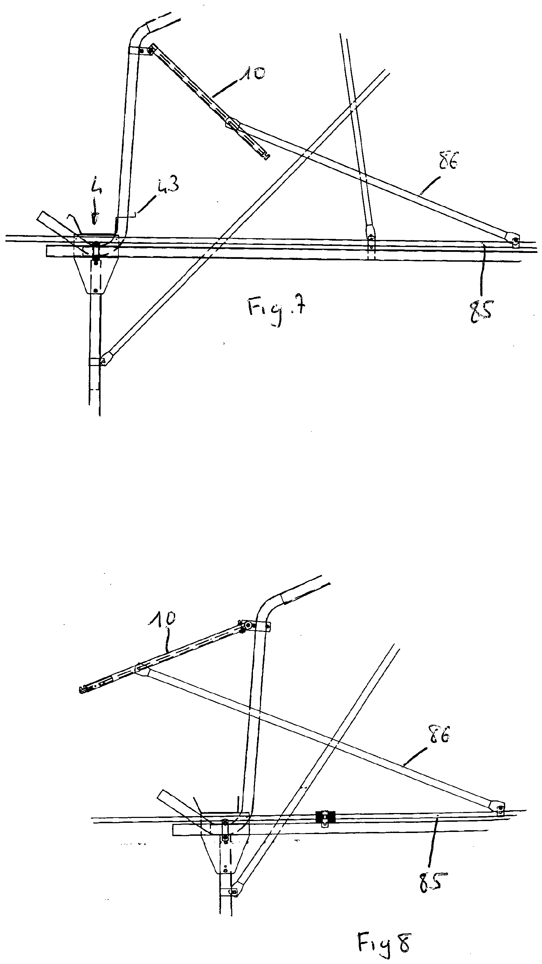

Dans la forme de réalisation objet de la figure 7, l'ouvrant 10 s'ouvre toujours vers l'intérieur, mais son axe d'articulation à l'ossature de la serre est situé en partie supérieure. Dans cette configuration, la lisse 101 de l'ouvrant 10 occupe une position inférieure et l'ouverture d'aération peut ne pas comporter de profilé d'étanchéité 110 comme cela est illustré en figure 7. Une telle disposition d'ouverture vers l'intérieur et vers le bas est principalement destinée à des serres devant être implantées dans des régions à fortes précipitations neigeuses. Cette ouverture vers l'intérieur et le bas de l'ouvrant permettra ainsi l'évacuation vers l'intérieur de la serre des accumulations neigeuses formées sur le chéneau 4 entre deux serres tunnel et par voie de conséquence d'éviter que cette accumulation n'occulte l'ouvrant et s'oppose à l'introduction de la lumière dans la serre.

Dans la forme de réalisation objet de la figure 8, l'ouvrant 10 s'ouvre vers l'extérieur et est articulé à l'ossature de la serre selon un axe d'articulation supérieur.

Pour notamment un ouvrant 10 s'ouvrant vers l'intérieur, l'ouverture d'aération peut être équipée d'un filet anti-insecte 9 fixé par une de ses bordures longitudinale à la lisse 101 de l'ossature de l'ouvrant 10 et par son autre bordure longitudinale à l'une des bordures de l'ouverture cette bordure étant celle recevant l'appui de la lisse 101 en position de fermeture de l'ouvrant. En outre le filet anti-insecte 9 comporte deux soufflets latéraux fixés par tous moyens connus aux côtés latéraux de l'ouverture.

Pour ce qui concerne la forme de réalisation objet de la figure 6 le filet anti-insecte 9 sera fixé par une de ses bordures dans l'une des gorges que présente le profilé de d'accrochage constitutif de la lisse 101 de l'ouvrant et dans la gorge de d'accrochage 113 formée dans la seconde aile 112 du profilé d'étanchéité 110 et ce à l'aide d'éléments longiforme engagés dans les gorges correspondantes, le filet 9 étant enserré entre cet élément et les faces de la gorge. Selon cette forme de réalisation, la bâche de recouvrement de l'ossature de l'ouvrant sera fixée d'une part à la lisse 101 que comporte ce dernier et d'autre part au profilé d'accrochage 44 porté par le second rebord 43.

Pour ce qui concerne la forme de réalisation objet de la figure 7, le filet anti-insecte 9 sera fixé par une de ses bordures longitudinales toujours à la lisse 101 de l'ouvrant et par son autre bordure au profilé d'accrochage 44 porté par le second rebord 43. Pour ce qui concerne la bâche de recouvrement de l'ossature de l'ouvrant, cette dernière sera fixée par une de ses bordures longitudinales à la lisse 101 que comporte l'ouvrant 10 et par son autre bordure à un profilé d'accrochage fixé au niveau de la rive supérieure de l'ouverture.

Les ouvrants 10 seront avantageusement actionnés en ouverture et fermeture par des barres de transmission 85 courant d'un tunnel à l'autre et montées en coulissement dans des paliers portés par les structures de serre et solidarisées à des moyens moteur. A ces barres de transmission 85 seront articulées des biellettes 86 elles même articulées aux différents ouvrants 10.

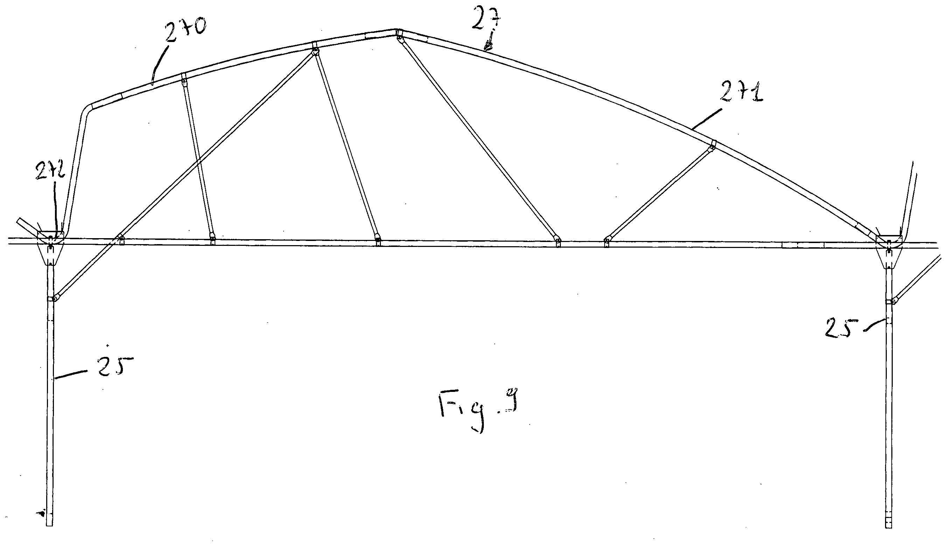

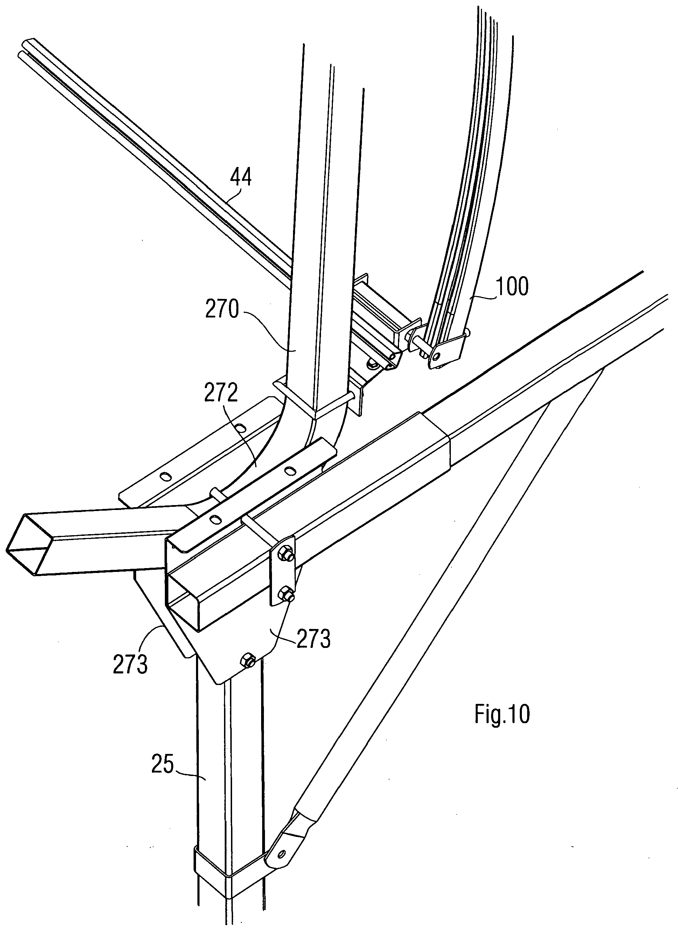

En figures 9 et 10 est représentée une serre avec une ossature de serre selon une autre forme de réalisation. La serre selon cette forme de réalisation comprend toujours un côté latéral plus haut que l'autre, mais chaque arceau est formé de deux poteaux verticaux 25 d'égales hauteurs supportant une structure de ferme 27 composée de deux profilés 270, 271 cintrés, de préférence tubulaires, joints l'un à l'autre au niveau de la ligne de faîte par un manchon de raccordement. Le premier de ces profilés 270 présente au droit du poteau correspondant 25, une partie verticale ou sensiblement verticale et forme avec ce poteau 25 le côté le plus haut. Cette partie verticale que présente le profilé 270 reçoit en fixation le profilé d'accrochage supérieur 15 du pan de bâche de recouvrement de l'ossature des pans de toiture. Selon une disposition avantageuse de l'invention, la partie verticale du premier profilé 270 est conformée en coude 272 en zone inférieure. La concavité du coude est tournée vers le haut et cette partie verticale présente au-delà du coude une partie rectiligne orientée vers le haut et inclinée par rapport à la verticale prévue pour recevoir en engagement de forme l'extrémité inférieure du second profilé 271 de ferme de l'arceau de l'ossature de ferme attenante.

Le premier profilé de ferme 270 est maintenu par le coude sur le poteau 25 correspondant par deux flasques parallèles 273 fixés au poteau 25 et déterminant un intervalle de serrage dans lequel est engagé en serrage le coude 272 que forme le premier profilé de ferme 270. Ces dispositions permettent l'orientation angulaire de la ferme 27 par rapport aux poteaux 25 et par voie de conséquence d'assurer la verticalité des poteaux 25 même pour une serre implantée sur un terrain en pente.

Après montage de la ferme sur les poteaux, des vis auto-foreuses seront engagées dans les flasques 273 et dans le coude 272 du premier profilé de ferme 270 pour immobiliser fermement ce dernier par rapport au poteau correspondant 25.

Il va de soi que la présente invention peut recevoir tous aménagements et variantes du domaine des équivalents techniques sans pour autant sortir du cadre du présent brevet. Cet ainsi que l'ouverture d'aération peut ne pas être ménagée dans la partie verticale du côté de plus grande hauteur mais dans un des pans de toiture, cette ouverture d'aération recevra alors un ouvrant articulé selon un axe horizontal parallèle à la ligne de faîte et pouvant occuper une position de fermeture, une position d'ouverture et des positions intermédiaires entre ces deux positions.

## Revendications

1. Serre tunnel (1), de culture comportant une ossature formée d'arceaux (2), destinée à être couverte par une bâche plastique de couverture transparente partiellement ou totalement enroulable pour laisser passer l'air, et protéger les cultures des intempéries, ladite bâche de culture pouvant être doublée par un rideau d'ombrage arrêtant totalement ou partiellement pour modérer le rayonnement solaire, ladite serre tunnel pouvant être combinée avec une ou des serres tunnel, dont au moins une est disposée latéralement sur un de ses côtés **caractérisée en ce que** :
- ladite serre tunnel est asymétrique, un de ses côtés ou paroi latérale longitudinale présente une hauteur supérieure à la hauteur de l'autre et que sa partie supérieure est verticale,
- chaque arceau (2) est formé de deux poteaux verticaux (25) d'égales hauteur supportant une structure de ferme (27) composée de deux profilés (270, 271) cintrés, tubulaires, joints l'un à l'autre au niveau de la ligne de faîte par un manchon de raccordement
- le premier de ces profilés (270) présente au droit du poteau correspondant (25) une partie verticale ou sensiblement verticale et forme avec ce poteau (25) le côté le plus haut.
- la partie verticale que présente le profilé (270) est conformée en coude (272) en zone inférieure, que la concavité du coude est tournée vers le haut et que cette partie verticale présente au-delà du coude une partie rectiligne orientée vers le haut et inclinée par rapport à la verticale prévue pour recevoir en engagement de forme l'extrémité inférieure du second profilé (271) de ferme de l'arceau de l'ossature de ferme attenante.

2. Serre tunnel selon la revendication précédente, **caractérisée en ce que** le premier profilé de ferme (270) est maintenu par le coude sur le poteau (25) correspondant par deux flasques parallèles (273) fixés au poteau (25) et déterminant un intervalle de serrage dans lequel est engagé en serrage le coude (272) que forme ledit premier profilé de ferme (270).

3. Serre tunnel selon l'une quelconque des revendications précédentes, **caractérisée en ce que** la paroi de plus grande hauteur est dotée en partie supérieure d'une ouverture longitudinale associée à un ouvrant (10) formé d'un volet articulé selon un axe horizontal parallèle à la ligne de faîte et pouvant occuper une position de fermeture, une position d'ouverture et des positions intermédiaires entre ces deux positions.

4. Serre tunnel selon la revendication précédente, **caractérisée en ce que** l'ossature de l'ouvrant (10) est formée d'une série de montants (100) rectilignes ou cintrés, réunis les uns aux autres au niveau d'une de leur extrémité par une lisse horizontale (101), parallèle à la ligne de faîte de la serre et articulés par leurs autres extrémités aux arceaux de l'ossature de la serre selon un axe d'articulation parallèle à la ligne de faîte.

5. Serre tunnel selon la revendication 3 ou la revendication 4, **caractérisée en ce qu'**en position de fermeture, l'ouvrant (10) vient contre un profilé d'étanchéité (110), élastiquement déformable s'étendant le long de l'un des bords horizontaux de l'ouverture d'aération.

6. Serre tunnel selon la revendication précédente, **caractérisée en ce que** le profilé d'étanchéité (110) est transparent à la lumière.

7. Serre tunnel selon la revendication 5 ou la revendication 6, **caractérisée en ce que** le profilé d'étanchéité (110) s'étend le long du bord supérieur de l'ouverture d'aération, et que l'ouvrant (10) s'ouvre vers l'intérieur de la serre et est articulé à l'ossature de la serre selon un axe d'articulation occupant une position inférieure par rapport audit ouvrant.

8. Serre tunnel selon l'une quelconque des revendications 5 à 7, **caractérisée en ce que** le profilé d'étanchéité (110) est formé de deux ailes (111, 112) perpendiculaires l'une à l'autre, la première (111) de ces deux ailes étant plus large que l'autre, et que ce profilé d'étanchéité, en position dans l'ouverture d'aération, est positionné en sorte que sa première aile (111) soit horizontale ou sensiblement horizontale et tournée vers l'extérieur et sa seconde aile (112) soit verticale ou sensiblement verticale et soit dans le plan de l'ouverture, ladite seconde aile (112) en position de fermeture de l'ouvrant (10) recevant en appui la lisse (101) de l'ossature de ce dernier.

9. Serre tunnel selon la revendication précédente, **caractérisée en ce que** la première aile (111) du profilé d'étanchéité est engagée en fixation dans la rainure longitudinale d'un profilé tubulaire (15), supérieur d'accrochage, longeant la bordure supérieure horizontale de l'ouverture d'aération.

10. Serre tunnel selon la revendication 8 ou la revendication 9, **caractérisée en ce que** la seconde aile (112) du profilé d'étanchéité (110) présente selon sa bordure longitudinale un repli longitudinal de section droite en U formant une gorge élastique (113) de fixation.

11. Serre tunnel selon l'une quelconque des revendications 3 à 10 comportant au moins un chéneau (4) de récupération des eaux de ruissellement, lequel chéneau présente un fond (41) deux parois latérales (42) et des premier et second rebords (43) s'étendant vers l'extérieur depuis les parois latérales, **caractérisée en ce que** le second rebord (43) est plan, plus large que le premier, occupe une position proche de l'horizontale et pénètre dans la serre tunnel attenante pour y recevoir en fixation, selon sa bordure longitudinale, un profilé d'accrochage (44) recevant en fixation la bordure d'un pan de bâche de recouvrement de l'ossature de l'ouvrant.

12. Serre tunnel selon la revendication 10 **caractérisée par** un filet anti-insecte (9) fixé par une de ses bordures longitudinales dans la gorge (113) du profilé d'étanchéité, par son autre bordure longitudinale dans une gorge de la lisse (101), ledit filet comportant deux soufflets latéraux fixés aux côtés latéraux de l'ouverture d'aération.

13. Serre tunnel selon l'une quelconque des revendications 3 à 12, **caractérisée en ce que** l'ouvrant (10) s'ouvre vers l'intérieur et est articulé à l'ossature de la serre selon un axe d'articulation occupant une position supérieure par rapport audit ouvrant.

14. Serre tunnel selon la revendication 3, **caractérisée en ce que** l'ouvrant (10) s'ouvre vers l'extérieur et est articulé à l'ossature de la serre selon un axe d'articulation occupant une position supérieure par rapport audit ouvrant.

15. Serre tunnel selon l'une quelconque des revendications précédentes, présentant deux pans de deux toitures **caractérisée en ce que** l'un au moins des dits pans de toiture présente une ouverture d'aération recevant un ouvrant articulé selon un axe horizontal parallèle à la ligne de faîte et pouvant occuper une position de fermeture, une position d'ouverture et des positions intermédiaires entre ces deux positions.

## Patentansprüche

1. Kultur-Tunnelgewächshaus (1), umfassend ein Gerüst, das aus Bögen (2) gebildet ist, das dazu bestimmt ist, von einer transparenten Kunststoff-Abdeckplane abgedeckt zu sein, die teilweise oder vollständig aufrollbar ist, um Luft durchzulassen und die Kulturen vor der Witterung zu schützen, wobei die Kulturplane von einem Schattierungsvorhang dubliert werden kann, der vollständig oder teilweise sperrt, um die Sonneneinstrahlung abzumildern, wobei das Tunnelgewächshaus mit einem oder mehreren Tunnelgewächshäusern kombiniert werden kann, wovon mindestens eins seitlich an einer seiner Seiten angeordnet ist, **dadurch gekennzeichnet, dass**:
- das Tunnelgewächshaus asymmetrisch ist, eine seiner Seiten oder Seitenwand in Längsrichtung eine größere Höhe als die Höhe der anderen aufweist und dass sein oberer Teil vertikal ist,
- jeder Gewölbebogen (2) aus zwei vertikalen Pfosten (25) gleicher Höhe gebildet ist, die eine Dachbinderstruktur (27) tragen, die aus zwei gewölbten röhrenförmigen Profilen (270, 271) gebildet ist, die an der Firstlinie durch eine Verbindungsmuffe miteinander verbunden sind,
- das erste dieser Profile (270) über dem entsprechenden Pfosten (25) einen vertikalen oder im Wesentlichen vertikalen Abschnitt aufweist und mit diesem Pfosten (25) die höchste Seite bildet.
- der vertikale Abschnitt, den das Profil (270) aufweist, als Bogen (272) im unteren Bereich ausgebildet ist, dass die Konkavität des Bogens nach oben gedreht ist, und dass dieser vertikale Bereich jenseits des Bogens einen geradlinigen Abschnitt aufweist, der nach oben gerichtet und bezogen auf die Vertikale geneigt ist, der dafür vorgesehen ist, das untere Ende des zweiten Dachbinderprofils (271) des Gewölbebogens des angrenzenden Dachbindergerüsts formschlüssig aufzunehmen.

2. Tunnelgewächshaus nach dem vorhergehenden Anspruch, **dadurch gekennzeichnet, dass** das erste Dachbinderprofil (270) durch zwei parallele Flansche (273), die an dem Pfosten (25) befestigt sind und ein Klemmintervall bestimmen, in welchem der Bogen (272), den das erste Dachbinderprofil (270) bildet, in Klemmeingriff steht, durch den Bogen auf dem entsprechenden Pfosten (25) gehalten wird.

3. Tunnelgewächshaus nach einem der vorhergehenden Ansprüche, **dadurch gekennzeichnet, dass** die Wand größerer Höhe im oberen Abschnitt mit einer Längsöffnung versehen ist, die mit einem Fensterflügel (10) in Verbindung steht, der aus einer Klappe gebildet ist, die gemäß einer horizontalen Achse, die zu der Firstlinie parallel ist, angelenkt ist und eine Schließposition, eine Öffnungsposition und Zwischenpositionen zwischen diesen zwei Positionen einnehmen kann.

4. Tunnelgewächshaus nach dem vorhergehenden Anspruch, **dadurch gekennzeichnet, dass** das Gerüst des Fensterflügels (10) aus einer Reihe geradliniger oder gewölbter Rahmenprofile (100) gebildet ist, die an einem ihrer Endes durch eine horizontale Strebe (101) miteinander verbunden sind, die zu der Firstlinie des Gewächshauses parallel ist, und an ihren anderen Enden gemäß einer Gelenkachse, die zu der Firstlinie parallel ist, an den Gewölbebögen des Gerüsts des Gewächshauses angelenkt sind.

5. Tunnelgewächshaus nach Anspruch 3 oder 4, **dadurch gekennzeichnet, dass** in der Schließposition der Fensterflügel (10) an ein Dichtungsprofil (110) anstößt, das elastisch verformbar ist und sich entlang eines der horizontalen Ränder der Lüftungsöffnung erstreckt.

6. Tunnelgewächshaus nach dem vorhergehenden Anspruch, **dadurch gekennzeichnet, dass** das Dichtungsprofil (110) lichtdurchlässig ist.

7. Tunnelgewächshaus nach Anspruch 5 oder 6, **dadurch gekennzeichnet, dass** sich das Dichtungsprofil (110) entlang des oberen Randes der Lüftungsöffnung erstreckt und dass sich der Fensterflügel (10) zum Inneren des Gewächshauses öffnet und gemäß einer Gelenkachse, die eine untere Position bezogen auf den Fensterflügel einnimmt, an das Gerüst des Gewächshauses angelenkt ist.

8. Tunnelgewächshaus nach einem der Ansprüche 5 bis 7, **dadurch gekennzeichnet, dass** das Dichtungsprofil (110) aus zwei Flügeln (111, 112) gebildet ist, die senkrecht zueinander sind, wobei der erste (111) dieser zwei Flügel breiter als der andere ist, und dadurch, dass dieses Dichtungsprofil in Position in der Lüftungsöffnung derart positioniert ist, dass sein erster Flügel (111) horizontal oder im Wesentlichen horizontal und nach außen gewandt ist und sein zweiter Flügel (112) vertikal oder im Wesentlichen vertikal und in der Ebene der Öffnung ist, wobei der zweite Flügel (112) in Schließposition des Fensterflügels (10) die Strebe (101) des Gerüsts des Letzteren anliegend aufnimmt.

9. Tunnelgewächshaus nach dem vorhergehenden Anspruch, **dadurch gekennzeichnet, dass** der erste Flügel (111) des Dichtungsprofils befestigend in die Längsrille eines oberen Hohlprofils (15) zum Aufhängen eingreift, das die obere horizontale Kante der Lüftungsöffnung entlangläuft.

10. Tunnelgewächshaus nach Anspruch 8 oder 9, **dadurch gekennzeichnet, dass** der zweite Flügel (112) des Dichtungsprofils (110) entlang seiner Längskante eine U-förmige Längsfaltung geraden Querschnitts aufweist, die eine elastische Befestigungsnut (113) bildet.

11. Tunnelgewächshaus nach einem der Ansprüche 3 bis 10, umfassend mindestens eine Rinne (4) zum Auffangen des Rieselwassers, wobei die Rinne einen Boden (41), zwei Seitenwände (42) und einen ersten und zweiten Rand (43) aufweist, die sich ausgehend von den Seitenwänden nach außen erstrecken, **dadurch gekennzeichnet, dass** der zweite Rand (43) eben, breiter als der erste ist, eine Position nahe der Horizontalen einnimmt und in das angrenzende Tunnelgewächshaus eindringt, um dort gemäß seiner Längskante eine Befestigung aufzunehmen, wobei ein Befestigungsprofil (44) die Kante eines Stücks Abdeckplane des Gerüsts des Fensterflügels befestigend aufnimmt.

12. Tunnelgewächshaus nach Anspruch 10, **gekennzeichnet durch** ein Insektenschutznetz (9), das an einer seiner Längskanten in der Nut (113) des Dichtungsprofils, an seiner anderen Längskante in einer Nut der Strebe (101) befestigt ist, wobei das Netz zwei Seitenfalten umfasst, die an den Seitenflächen der Lüftungsöffnung befestigt sind.

13. Tunnelgewächshaus nach einem der Ansprüche 3 bis 12, **dadurch gekennzeichnet, dass** sich der Fensterflügel (10) nach innen öffnet und gemäß einer Gelenkachse, die eine obere Position bezogen auf den Fensterflügel einnimmt, an das Gerüst des Gewächshauses angelenkt ist.

14. Tunnelgewächshaus nach Anspruch 3, **dadurch gekennzeichnet, dass** sich der Fensterflügel (10) nach außen öffnet und gemäß einer Gelenkachse, die eine obere Position bezogen auf den Flügel einnimmt, an das Gerüst des Gewächshauses angelenkt ist.

15. Tunnelgewächshaus nach einem der vorhergehenden Ansprüche, das zwei Stücke zweier Bedachungen aufweist, **dadurch gekennzeichnet, dass** mindestens eins der Bedachungsstücke eine Lüftungsöffnung aufweist, die einen Fensterflügel aufnimmt, der gemäß einer horizontalen Achse, die zu der Firstlinie parallel ist, angelenkt ist und eine Schließposition, eine Öffnungsposition und Zwischenpositionen zwischen diesen zwei Positionen einnehmen kann.

## Claims

1. Tunnel greenhouse (1) for crops, comprising a framework formed of hoops (2) and designed to be covered by a transparent plastic sheet cover that can be partially or entirely rolled up in order to allow air through, and to protect the crops from bad weather, said crop sheet can be complemented by a partially or completely opaque shading screen in order to moderate the solar radiation, said tunnel greenhouse can be combined with one or more tunnel greenhouses, at least one of which is arranged laterally on one of its sides, **characterized in that**:
- said tunnel greenhouse is asymmetric, with one of its sides or longitudinal lateral wall being taller than the other, its upper portion being vertical,
- each hoop (2) is formed by two vertical posts (25) of equal height supporting a truss structure (27) comprising two curved tubular profiles (270, 271) that are joined to one another at the ridge line by a connecting sleeve,
- the first of these profiles (270) has, in line with the corresponding post (25), a vertical or essentially vertical portion, and forms with this post (25) the taller side,
- the lower region of the vertical portion of the profile (270) is shaped as an elbow (272), the concave part of the elbow being oriented upwards, and that this vertical part has, beyond the elbow, a straight portion that is oriented upwards and is inclined with respect to the vertical and is intended to receive, in a form fit, the lower end of the second truss profile (271) of the hoop of the adjoining truss framework.

2. Tunnel greenhouse according to the preceding claim, **characterized in that** the first truss profile (270) is held by the elbow on the corresponding post (25) by means of two parallel brackets (273) that are attached to the post (25) and define a clamping space in which is clamped the elbow (272) formed by said first truss profile (270).

3. Tunnel greenhouse according to either of the preceding claims, **characterized in that** the taller wall is provided, in its upper portion, with a longitudinal opening associated with an opening leaf (10) formed by a flap that is articulated about a horizontal axis parallel to the ridge line and that can adopt a closed position, an open position and intermediate positions between these two positions.

4. Tunnel greenhouse according to the preceding claim, **characterized in that** the framework of the opening leaf (10) is made of a set of straight or curved uprights (100) that are connected to one another at one of their ends by a horizontal stringer (101) that is parallel to the ridge line of the greenhouse, and are articulated by their other ends to the hoops of the framework of the greenhouse, about an axis of articulation which is parallel to the ridge line.

5. Tunnel greenhouse according to Claim 3 or Claim 4, **characterized in that**, in the closed position, the opening leaf (10) abuts against an elastically deformable sealing profile (110) which extends along one of the horizontal edges of the ventilation opening.

6. Tunnel greenhouse according to the preceding claim, **characterized in that** the sealing profile (110) is transparent to light.

7. Tunnel greenhouse according to Claim 5 or Claim 6, **characterized in that** the sealing profile (110) extends along the upper edge of the ventilation opening, and **in that** the opening leaf (10) opens towards the interior of the greenhouse and is articulated to the framework of the greenhouse about an articulation axis that is in a lower position with respect to said opening leaf.

8. Tunnel greenhouse according to any one of Claims 5 to 7, **characterized in that** the sealing profile (110) is formed by two mutually perpendicular flanges (111, 112), the first (111) of these two flanges being larger than the other, and **in that** this sealing profile, when in position in the ventilation opening, is positioned such that its first flange (111) is horizontal or essentially horizontal and oriented towards the exterior, and its second flange (112) is vertical or essentially vertical and is in the plane of the opening, wherein, in the closed position of the opening leaf (10), the stringer (101) of the framework of this opening leaf presses against said second flange (112).

9. Tunnel greenhouse according to the preceding claim, **characterized in that** the first flange (111) of the sealing profile is fixedly engaged in the longitudinal groove of a tubular upper attachment profile (15) that runs along the horizontal upper edge of the ventilation opening.

10. Tunnel greenhouse according to Claim 8 or Claim 9, **characterized in that** the second flange (112) of the sealing profile (110) has, along its longitudinal edge, a longitudinal fold of U-shaped cross section forming an elastic attachment channel (113).

11. Tunnel greenhouse according to any one of Claims 3 to 10, comprising at least one gutter (4) for catching rainwater, which gutter has a bottom (41), two side walls (42) and first and second rims (43) extending out from the side walls, **characterized in that** the second rim (43) is planar and is wider than the first, is almost horizontal and enters the adjoining tunnel greenhouse where it is attached, along its longitudinal edge, an attachment profile (44) securing the edge of a section of covering sheet of the framework of the opening leaf.

12. Tunnel greenhouse according to Claim 10, **characterized by** an insect screen (9) secured by one of its longitudinal edges in the channel (113) of the sealing profile, by its other longitudinal edge in a channel of the stringer (101), said screen comprising two lateral gussets secured to the lateral sides of the ventilation opening.

13. Tunnel greenhouse according to any one of Claims 3 to 12, **characterized in that** the opening leaf (10) opens inwards and is articulated to the framework of the greenhouse about an axis of articulation in an upper position with respect to said opening leaf.

14. Tunnel greenhouse according to Claim 3, **characterized in that** the opening leaf (10) opens outwards and is articulated to the framework of the greenhouse about an axis of articulation in an upper position with respect to said opening leaf.

15. Tunnel greenhouse according to any one of the preceding claims, having two sections of two roofs, **characterized in that** at least one of said roof sections has a ventilation opening in which there is an opening leaf that is articulated about a horizontal axis parallel to the ridge line and that can adopt a closed position, an open position and intermediate positions between these two positions.
